# EUROPEAN PATENT APPLICATION

(11) **EP 3 913 870 A1**
(43) Date of publication of application: **24.11.2021**
(21) Application number: 21173398.5
(22) Date of filing: 11.05.2021
(51) Int. Cl.: H04L 12/751, H04L 12/46, H04L 12/721, H04L 12/741, H04L 29/12, H04L 12/705

(54) **PACKET FORWARDING METHOD AND NETWORK DEVICE**

(30) Priority: 12.05.2020 CN 202010400993
(71) Applicant: Huawei Technologies Co., Ltd., Shenzhen, Guangdong 518129 (CN)
(72) Inventor: YANG, Jie, Shenzhen, 518129 (CN); WANG, Haibo, Shenzhen, 518129 (CN)
(74) Representative: Gill Jennings & Every LLP

(57) **Abstract**

This application provides a packet forwarding method and a network device. The method specifically includes: sending, by a first network device, first routing information to a second network device, where the first routing information is used to advertise a route to a first address of a first virtual machine, and the first routing information includes a first virtual network identifier of the first virtual machine; receiving, by the first network device, a first packet sent by the second network device, where the first packet carries the first virtual network identifier, and a destination address of the first packet is the first address; and forwarding, by the first network device, the first packet to the first virtual machine based on the first virtual network identifier. The first network device forwards the first packet to the corresponding local virtual machine based on the virtual network identifier in the first packet, and does not need to forward the packet according to a virtual routing and forwarding VRF table. This prevents the packet from being forwarded to another network device again, and ensures normal forwarding of the packet.

## Description

### TECHNICAL FIELD

This application relates to the field of communications technologies, and in particular, to a packet forwarding method and a network device.

### BACKGROUND

With rapid development of cloud computing, a data center is increasingly virtualized. To meet an increasing user requirement, the data center usually uses a virtual extensible local area network (Virtual Extensible Local Area Network, VXLAN) technology to extend network virtualization, to obtain a sufficient quantity of virtual networks, so as to meet a use requirement of a user.

A VXLAN of the data center usually includes a core device, a plurality of peer VXLAN tunnel endpoint (VXLAN Tunnel End Point, VTEP) devices, and a virtual machine (virtual machine, VM) connected to each of the VTEP devices. Generally, the VM may be deployed on a server connected to the VTEP device. A virtual network function (virtual network function, VNF) network element may be distributed on a plurality of VMs, and the plurality of VMs can implement a same network function and share a same service internet (Internet Protocol, IP) address.

Currently, in the VXLAN network, when a plurality of VMs of a same VNF network element are connected to different VXLAN tunnel endpoint devices, a routing loop is likely to occur when the VXLAN tunnel endpoint device receives a packet from a network side and forwards the packet. Consequently, the packet cannot be correctly sent to the VM.

### SUMMARY

Embodiments of this application provide a packet forwarding method and a network device. A first network device receives a packet sent by a second network device, where the packet carries a virtual network identifier corresponding to a local virtual machine of the first network device. In addition, the first network device may forward the first packet to the corresponding local virtual machine based on the virtual network identifier in the packet, and does not need to forward the packet based on a virtual routing and forwarding (Virtual Routing Forwarding, VRF) table. This prevents the packet from being forwarded to another network device again, and ensures normal forwarding of the packet.

A first aspect of this application provides a packet forwarding method. The method includes: A first network device sends first routing information to a second network device, where the first routing information is used to advertise a route to a first address of a first virtual machine, the first routing information includes a first virtual network identifier of the first virtual machine, and the first virtual machine is a local virtual machine of the first network device. The first network device receives a first packet sent by the second network device, where the first packet carries the first virtual network identifier, and a destination address of the first packet is the first address. The first network device forwards the first packet to the first virtual machine based on the first virtual network identifier. The first address of the first virtual machine may be a service IP address shared by the first virtual machine and one or more other virtual machines. Virtual machines that share a same service IP address may be used to process a same service. For example, the first address of the first virtual machine may be a loopback (loopback) IP address.

In this solution, the first network device determines, based on the first virtual network identifier in the first packet, to forward the first packet to the first virtual machine corresponding to the first virtual network identifier, and does not need to forward the first packet according to a VRF table in the first network device. This prevents the first packet from being forwarded to another network device again, resulting in a routing loop and other problems, and ensures normal forwarding of the first packet.

Optionally, in a possible implementation, before the first network device sends the first routing information to the second network device, the method further includes: The first network device allocates the first virtual network identifier to the first virtual machine based on a fact that the first virtual machine is the local virtual machine of the first network device. When a VXLAN tunnel is deployed between the first network device and the second network device, the first virtual network identifier allocated by the first network device to the first virtual machine may be specifically a VXLAN network identifier (VXLAN Network Identifier, VNI), and the VNI may be used to identify the first virtual machine in a VXLAN network.

Optionally, in a possible implementation, the method further includes: After a second virtual machine connected to the first network device is online, the first network device sends second routing information to the second network device. The second routing information is used to advertise a route to the first address of the second virtual machine, and the second routing information includes a second virtual network identifier of the second virtual machine. The first address is an address shared by the first virtual machine and the second virtual machine, the second virtual network identifier is different from the first virtual network identifier, and the second virtual machine is a local virtual machine of the first network device.

Optionally, in a possible implementation, the method further includes: The first network device receives a second packet sent by the second network device, where the second packet carries the second virtual network identifier, and a destination address of the second packet is the first address. The first network device forwards the second packet to the second virtual machine based on the second virtual network identifier. In other words, when receiving the second packet, the second network device may select, based on the destination address of the second packet, the second virtual machine as a virtual machine that processes the second packet for the first address, and send the second packet including the second virtual network identifier corresponding to the second virtual machine to the first network device, so that the first network device forwards the second packet to the second virtual machine based on the second virtual network identifier. For example, when receiving the second packet, the second network device may select, in the VRF table, a route including the second virtual network identifier as a route for forwarding the second packet, and send the second packet including the second virtual network identifier to the first network device.

In this solution, the second network device may, for example, determine, in the VRF table including a plurality of routes according to a load balancing policy, one of the routes as the route for forwarding the packet, and forward the packet including a virtual network identifier in the determined route to the first network device, so that the first network device can forward the packet to a corresponding virtual machine based on the virtual network identifier in the packet. This ensures that the packet can be normally forwarded to the virtual machine selected by the second network device, and implements load balancing of virtual machines while the routing loop is avoided.

Optionally, in a possible implementation, the first routing information further includes an IP address of the first virtual machine, and the method further includes: The first network device stores a correspondence between the first virtual network identifier and the IP address of the first virtual machine. In this way, the first network device can determine the IP address of the first virtual machine based on the first virtual network identifier.

Optionally, in a possible implementation, when the first network device stores the correspondence between the first virtual network identifier and the IP address of the first virtual machine, that the first network device forwards the first packet to the first virtual machine based on the first virtual network identifier includes: The first network device determines, based on the first virtual network identifier in the first packet, the IP address of the first virtual machine corresponding to the first virtual network identifier. The first network device forwards the first packet to the first virtual machine through a local outbound interface based on the IP address of the first virtual machine.

Optionally, in a possible implementation, the second network device may perform tunnel encapsulation on the first packet sent to the first network device. After the first network device receives the first packet sent by the second network device, the first network device performs tunnel decapsulation on the first packet to obtain the first virtual network identifier, so as to forward the first packet to the first virtual machine based on the first virtual network identifier.

Optionally, in a possible implementation, the first address of the first virtual machine is the loopback loopback address.

Optionally, in a possible implementation, the virtual extensible local area network VXLAN tunnel is deployed between the first network device and the second network device.

A second aspect of this application provides a packet forwarding method. The method includes: A second network device receives first routing information sent by a first network device, where the first routing information is used to advertise a route to a first address of a first virtual machine, the first routing information includes a first virtual network identifier of the first virtual machine, and the first virtual machine is a local virtual machine of the first network device. The second network device sends a first packet to the first network device, where a destination address of the first packet is the first address, and the first packet carries the first virtual network identifier of the first virtual machine.

Optionally, in a possible implementation, the first virtual network identifier in the first packet is used to indicate the first network device to forward the first packet to the first virtual machine based on the first virtual network identifier.

Optionally, in a possible implementation, the method further includes:

The second network device generates a virtual routing and forwarding VRF table based on the first routing information, where the VRF table includes a correspondence between the first address of the first virtual machine and the first virtual network identifier.

Optionally, in a possible implementation, that the second network device sends a first packet to the first network device based on the first address includes:

The second network device determines, in the VRF table based on a fact that the destination address of the first packet is the first address, the first virtual network identifier corresponding to the first address.

The second network device sends the first packet to the first network device, where the first packet carries the first virtual network identifier.

Optionally, in a possible implementation, the method further includes: The second network device receives second routing information sent by the first network device, where the second routing information is used to advertise a route to the first address of a second virtual machine, and the second routing information includes a second virtual network identifier of the second virtual machine. The first address is an address shared by the first virtual machine and the second virtual machine, the second virtual network identifier is different from the first virtual network identifier, and the second virtual machine is a local virtual machine of the first network device.

Optionally, in a possible implementation, the method further includes: The second network device sends a second packet to the first network device, where the second packet carries the second virtual network identifier, and a destination address of the second packet is the first address. The second virtual network identifier is used to indicate the first network device to forward the second packet to the second virtual machine based on the second virtual network identifier.

Optionally, in a possible implementation, the first routing information further includes an IP address of the first virtual machine, and before the second network device sends the first packet to the first network device, the method further includes: The second network device performs tunnel encapsulation on the first packet based on the IP address of the first virtual machine, to send the first packet to the first network device through a tunnel.

A third aspect of this application provides a network device. The network device includes: a sending unit, configured to send first routing information to a second network device, where the first routing information is used to advertise a route to a first address of a first virtual machine, the first routing information includes a first virtual network identifier of the first virtual machine, and the first virtual machine is a local virtual machine of the first network device; and a receiving unit, configured to receive a first packet sent by the second network device, where the first packet carries the first virtual network identifier, and a destination address of the first packet is the first address. The sending unit is further configured to forward the first packet to the first virtual machine based on the first virtual network identifier.

Optionally, in a possible implementation, the network device further includes a processing unit, configured to allocate the first virtual network identifier to the first virtual machine based on a fact that the first virtual machine is the local virtual machine of the first network device.

Optionally, in a possible implementation, the sending unit is further configured to send second routing information to the second network device, where the second routing information is used to advertise a route to the first address of a second virtual machine, and the second routing information includes a second virtual network identifier of the second virtual machine. The first address is an address shared by the first virtual machine and the second virtual machine, the second virtual network identifier is different from the first virtual network identifier, and the second virtual machine is a local virtual machine of the first network device.

Optionally, in a possible implementation, the receiving unit is further configured to receive a second packet sent by the second network device, where the second packet carries the second virtual network identifier, and a destination address of the second packet is the first address. The sending unit is further configured to forward the second packet to the second virtual machine based on the second virtual network identifier.

Optionally, in a possible implementation, the first routing information further includes an IP address of the first virtual machine. The processing unit is further configured to store a correspondence between the first virtual network identifier and the IP address of the first virtual machine.

Optionally, in a possible implementation, the processing unit is further configured to determine, based on the first virtual network identifier in the first packet, the IP address of the first virtual machine corresponding to the first virtual network identifier.

The sending unit is further configured to forward the first packet to the first virtual machine through a local outbound interface based on the IP address of the first virtual machine.

Optionally, in a possible implementation, the processing unit is further configured to perform tunnel decapsulation on the first packet to obtain the first virtual network identifier, so as to forward the first packet to the first virtual machine based on the first virtual network identifier.

Optionally, in a possible implementation, the first address of the first virtual machine is a loopback loopback address.

Optionally, in a possible implementation, a VXLAN tunnel is deployed between the network device and the second network device.

A fourth aspect of this application provides a network device. The network device includes: a receiving unit, configured to receive first routing information sent by a first network device, where the first routing information is used to advertise a route to a first address of a first virtual machine, the first routing information includes a first virtual network identifier of the first virtual machine, and the first virtual machine is a local virtual machine of the first network device; and a sending unit, configured to send a first packet to the first network device, where a destination address of the first packet is the first address, and the first packet carries the first virtual network identifier of the first virtual machine.

Optionally, in a possible implementation, the first virtual network identifier in the first packet is used to indicate the first network device to forward the first packet to the first virtual machine based on the first virtual network identifier.

Optionally, in a possible implementation, the network device further includes a processing unit, configured to generate a VRF table based on the first routing information, where the VRF table includes a correspondence between the first address of the first virtual machine and the first virtual network identifier.

Optionally, in a possible implementation, the processing unit is further configured to determine, in the VRF table based on a fact that the destination address of the first packet is the first address, the first virtual network identifier corresponding to the first address. The sending unit is further configured to send the first packet to the first network device, where the first packet carries the first virtual network identifier.

Optionally, in a possible implementation, the receiving unit is further configured to receive second routing information sent by the first network device, where the second routing information is used to advertise a route to the first address of a second virtual machine, and the second routing information includes a second virtual network identifier of the second virtual machine. The first address is an address shared by the first virtual machine and the second virtual machine, the second virtual network identifier is different from the first virtual network identifier, and the second virtual machine is a local virtual machine of the first network device.

Optionally, in a possible implementation, the sending unit is further configured to send a second packet to the first network device. The second packet carries the second virtual network identifier, and a destination address of the second packet is the first address. The second virtual network identifier is used to indicate the first network device to forward the second packet to the second virtual machine based on the second virtual network identifier.

Optionally, in a possible implementation, the first routing information further includes an IP address of the first virtual machine. The processing unit is further configured to perform tunnel encapsulation on the first packet based on the IP address of the first virtual machine, to send the first packet to the first network device through a tunnel.

A fifth aspect of this application provides a network device. The network device includes a processor and a memory. The memory is configured to store an instruction, and the processor is configured to execute the instruction in the memory, to enable the network device to perform the method according to the first aspect or the second aspect.

A sixth aspect of this application provides a network device. The network device includes a processor. The processor is coupled to a memory, and the processor is configured to execute an instruction in the memory, to enable the network device to perform the method according to the first aspect or the second aspect.

A seventh aspect of this application provides a computer storage medium. The computer storage medium may be non-volatile. The computer storage medium stores a computer-readable instruction, and when the computer-readable instruction is executed by a processor, the method in any design in the first aspect or the second aspect is implemented.

An eighth aspect of this application provides a computer program product including an instruction. When the computer program product runs on a computer, the computer is enabled to perform the method in any design of the first aspect or the second aspect.

A ninth aspect of this application provides a chip system. The chip system includes a processor, configured to support a network device in implementing a function in the foregoing aspects, for example, sending or processing data and/or information in the foregoing methods. In a possible design, the chip system further includes a memory, and the memory is configured to store a program instruction and data that are necessary for the network device. The chip system may include a chip, or may include a chip and another discrete component.

According to the foregoing technical solutions, it can be learned that the embodiments of this application have the following advantages:

Embodiments of this application provide a packet forwarding method and a network device. A first network device receives a packet sent by a second network device, where the packet carries a virtual network identifier corresponding to a local virtual machine of the first network device. In addition, the first network device may forward the first packet to the corresponding local virtual machine based on the virtual network identifier in the packet, and does not forward the packet according to a VRF table. This prevents the packet from being forwarded to another network device again, and ensures normal forwarding of the packet.

### BRIEF DESCRIPTION OF DRAWINGS

FIG. 1 is a schematic diagram of networking of a data center according to an embodiment of this application;
FIG. 2a is a schematic diagram of north-south traffic according to an embodiment of this application;
FIG. 2b is a schematic diagram of east-west traffic according to an embodiment of this application;
FIG. 3 is a schematic diagram of a service scenario according to an embodiment of this application;
FIG. 4 is a schematic diagram of another scenario according to an embodiment of this application;
FIG. 5 is a schematic flowchart of a packet forwarding method 500 according to an embodiment of this application;
FIG. 6 is a schematic diagram of encapsulation of a VXLAN tunnel packet according to an embodiment of this application;
FIG. 7 is a schematic flowchart of a packet forwarding method 700 according to an embodiment of this application;
FIG. 8 is a schematic diagram of a packet forwarding method according to an embodiment of this application;
FIG. 9 is a schematic structural diagram of a network device 90 according to an embodiment of this application; and
FIG. 10 is a schematic structural diagram of a network device 100 according to an embodiment of this application.

### DESCRIPTION OF EMBODIMENTS

To make the objectives, technical solutions, and advantages of this application clearer, the following describes embodiments of this application with reference to accompanying drawings. Definitely, the described embodiments are merely some rather than all of the embodiments of this application. A person of ordinary skill in the art may learn that as a new application scenario emerges, the technical solutions provided in the embodiments of this application are also applicable to a similar technical problem.

In the specification, claims, and the accompanying drawings of this application, the terms "first", "second", and the like are intended to distinguish similar objects but do not necessarily indicate a specific order or sequence. It should be understood that the data termed in such a way is interchangeable in a proper circumstance, so that the embodiments described herein can be implemented in other orders than the order illustrated or described herein. In addition, the terms "include", "contain" and any other variants mean to cover the non-exclusive inclusion, for example, a process, method, system, product, or device that includes a list of steps or modules is not necessarily limited to the expressly listed steps or modules, but may include other steps or modules not expressly listed or inherent to such a process, method, product, or device. Naming or numbering of steps in this application does not mean that the steps in the method procedures need to be performed in a time/logical order indicated by the naming or numbering. An execution order of the steps in the procedures that have been named or numbered can be changed based on a technical objective to be achieved, provided that same or similar technical effects can be achieved. Division into units in this application is logical division and may be other division in an actual implementation. For example, a plurality of units may be combined or integrated into another system, or some features may be ignored or not performed. In addition, the displayed or discussed mutual couplings or direct couplings or communications connections may be implemented through some interfaces. The indirect couplings or communications connections between the units may be implemented in electronic or other similar forms. This is not limited in this application. In addition, units or subunits described as separate components may be or may not be physically separated, may be or may not be physical units, or may be distributed into a plurality of circuit units. Objectives of the solutions of this application may be achieved by selecting some or all of the units based on an actual requirement.

In conventional mobile communications networks such as a second generation (2 generation, 2G) communications network, a third generation (3 generation, 3G) communications network, and a fourth generation (4 generation, 4G) communications network, most telecommunications devices each use a dedicated platform structure. In other words, software and hardware of different telecommunications devices are independent of each other. For example, in a 4G network system, a mobility management entity (mobility management entity, MME), a serving gateway (serving gateway, S-GW), a packet data network gateway (packet data network gateway, P-GW), and the like are separately carried by independent frame-shaped or box-shaped devices, and these devices cannot be shared at a software layer and a hardware layer. In other words, if MME load is low in an equipment room, an MME board cannot be pulled out and plugged in an S-GW that is about to be overloaded.

With integration and large-scale deployment of a data center, as well as increasing maturity of the fifth generation (5 generation, 5G) communications technology, a network functions virtualization (network functions virtualization, NFV) technology, and a cloud technology, a telecommunications network element is gradually migrating from a dedicated hardware platform to a universal hardware platform in the data center, and is deployed on a VM of a server in the data center in a form of a VNF network element, to form a telecommunications cloud data center network.

Currently, in the data center, there are features such as centralized data exchange and increasing east-west traffic, and a requirement for a data center network is further improved. To adapt to the foregoing changes, the data center network transforms from a conventional virtual local area network (virtual local area network, VLAN) to a VXLAN network and software-defined networking (network defined software, SDN), to implement adaptation and association between the network and a service, and increase resource utilization efficiency and service provisioning efficiency. The VXLAN is a network virtualization technology in which a data packet sent from a source host is encapsulated into a user datagram protocol (User Datagram Protocol, UDP), an IP and MAC of a physical network are used as an outer header for encapsulation, and then the data packet is transmitted over the network. After the data packet reaches a destination, a tunnel endpoint decapsulates the data packet and sends data to a target host. The VXLAN technology may be used to construct a Layer 2 virtual network on an existing Layer 3 network to implement Layer 2 communication between VMs.

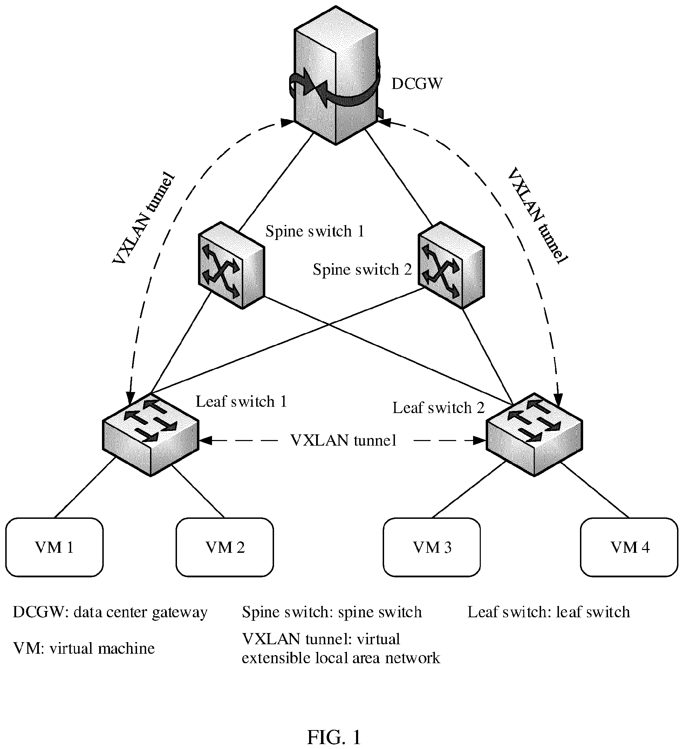

For details, refer to FIG. 1. FIG. 1 is a schematic diagram of networking of a data center according to an embodiment of this application. In the data center, typical VXLAN networking may include a data center gateway (data center gateway, DCGW), a spine (spine) switch, a leaf (leaf) switch, and a VM. The DCGW may be connected to one or more spine switches, the spine switch may be connected to one or more leaf switches, and the leaf switch may be connected to one or more VMs. A VXLAN tunnel may be established between the DCGW and the leaf switch, and a VXLAN tunnel may also be established between leaf switches.

For ease of understanding, the following explains terms used in a VXLAN network.

A VTEP device is a network device that can encapsulate and decapsulate a VXLAN packet. In the VXLAN packet, a source IP address is an IP address of a source end VTEP device, and a destination IP address is an IP address of a destination end VTEP device. One pair of VTEP addresses corresponds to one VXLAN tunnel. After encapsulating the packet, the source end VTEP device sends the encapsulated packet to the destination end VTEP device through a tunnel, and then the destination end VTEP device decapsulates the received encapsulated packet. The leaf switch device in FIG. 1 may have a capability of encapsulating and decapsulating the VXLAN packet. That is, the leaf switch device in FIG. 1 is a VTEP device.

Network virtualization edge (Network Virtualization Edge, NVE) device: The NVE device is a network entity that implements a network virtualization function. After a packet is encapsulated and converted by the NVE device, a Layer 2 virtual network may be established between NVE devices based on a Layer 3 underly network. The leaf switch device in FIG. 1 is an NVE device. The VTEP device is a type of the NVE device.

A Layer 2 gateway (Level-2 GateWay, L2GW) is similar to a Layer 2 access device in a conventional network. In the VXLAN network, the L2GW allows a tenant to access a VXLAN virtual network, or allows communication between subnets in a same VXLAN network.

Layer 3 gateway (Level-3 Gateway, L3GW): To perform communication between VXLAN networks and communication between the VXLAN network and a non-VXLAN network, a concept of the L3GW is introduced. The L3GW may be used for cross-subnet communication of the VXLAN network and access to an external network. The leaf switch in FIG. 1 may be used as an L2GW or an L3GW, or may be used as both an L2GW and L3GW. In other words, the leaf switch may be the L2GW/L3GW.

Generally, traffic of a data center network may be classified into north-south traffic and east-west traffic traffic. The north-south traffic refers to traffic flowing from the external network to the data center network and traffic flowing from the data center network to the external network. When the north-south traffic is transmitted in the data center, one endpoint of the VXLAN tunnel is at the DCGW, and the other endpoint is at the leaf switch. In other words, the traffic is transmitted from the DCGW to the leaf switch or from the leaf switch to the DCGW. The east-west traffic refers to traffic between VMs in the data center. When the east-west traffic is transmitted in the data center, both the endpoints of the VXLAN tunnel are at leaf switches. In other words, the traffic is generally transmitted from one leaf switch to the other leaf switch. When traffic flows from the DCGW to a leaf switch or from another leaf switch to a leaf switch, the traffic belongs to traffic flowing from a network side. When traffic flows from a user-side device or a user network to a leaf switch, for example, flows from a VM connected to the leaf switch to the leaf switch, the traffic belongs to traffic flowing from a user side.

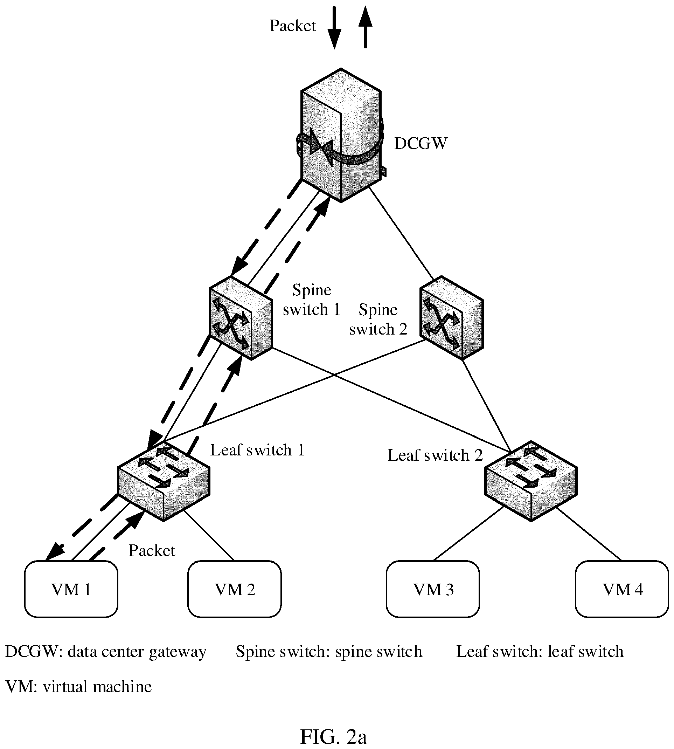

For details, refer to FIG. 2a. FIG. 2a is a schematic diagram of north-south traffic according to an embodiment of this application. As shown in FIG. 2a, a packet entering the data center from the external network is forwarded by the DCGW to a leaf switch 1 through a spine switch 1, and is finally forwarded by the leaf switch 1 to a VM 1 connected to the leaf switch 1. Similarly, the VM 1 sends a packet generated by the VM 1 to leaf 1, the leaf switch 1 forwards the packet to the DCGW through the spine switch 1, and finally the DCGW sends the packet to the external network. Both traffic from the DCGW to the VM 1 and traffic from the VM 1 to the DCGW may be referred to as north-south traffic.

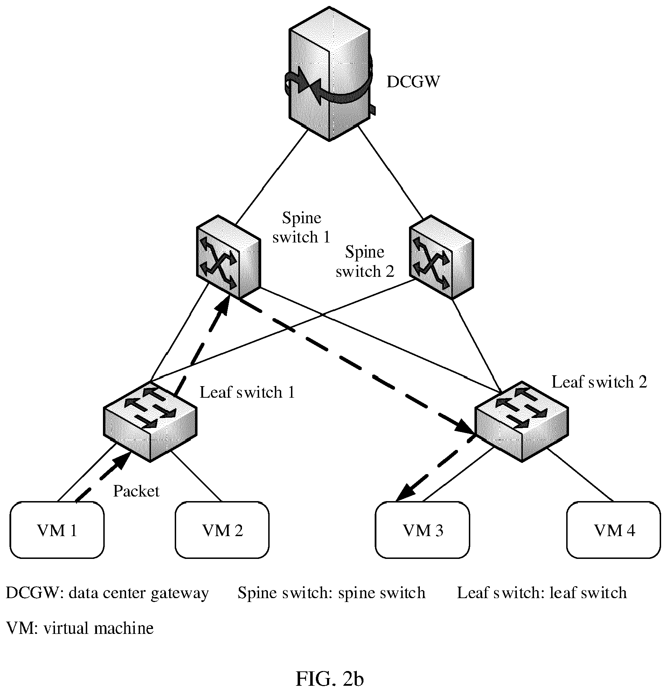

FIG. 2b is a schematic diagram of east-west traffic according to an embodiment of this application. As shown in FIG. 2a, the VM 1 sends the packet generated by the VM 1 to the leaf switch 1, the leaf switch 1 forwards the packet to a leaf switch 2 through the spine switch 1, and finally the leaf switch 2 sends the packet to a VM 3. Traffic from the VM 1 to the VM 3 may be referred to as east-west traffic.

Generally, when the SDN is deployed in the VXLAN network, the leaf switch may forward east-west traffic between two VMs in different subnets along a shortest path. The spine switch forwards the traffic to another VM along the shortest path, to prevent inter-subnet traffic from being diverted to the DCGW and forming a traffic bottleneck.

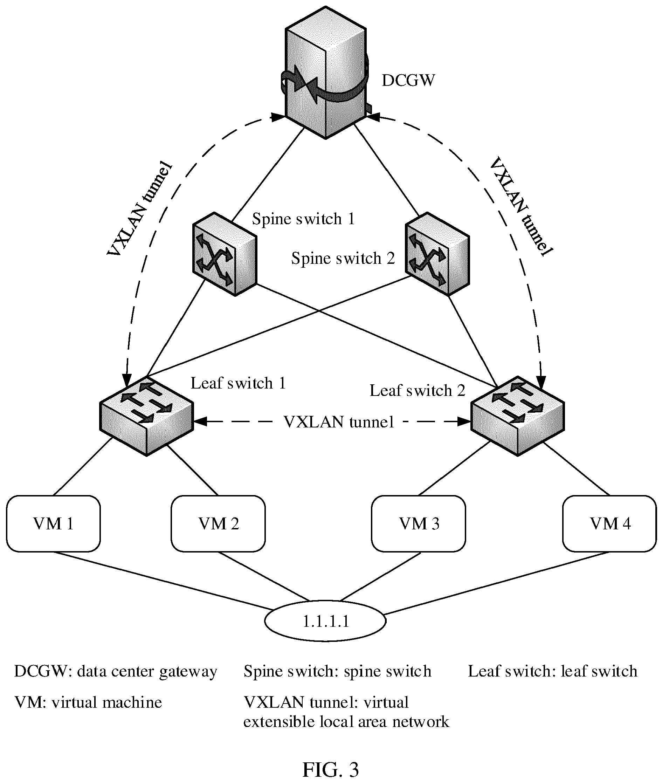

In the data center network, a VM can be deployed randomly, and the VM can even be dynamically migrated under a specific condition. In this way, when a VNF network element is distributed on a plurality of VMs, the plurality of VMs share a same IP address, and the plurality of VMs may be deployed on different racks. In other words, the plurality of VMs are connected to different leaf switches. FIG. 3 is a schematic diagram of a service scenario according to an embodiment of this application. A VNF network element is distributed on a VM 1 to a VM 4, and the VM 1 to the VM 4 may share a same IP address (the IP address may be, for example, 1.1.1.1). The VM 1 and the VM 2 are connected to a leaf switch 1, and the VM 3 and the VM 4 are connected to a leaf switch 2. In this way, when the leaf switch 1 forwards a packet whose IP address is 1.1.1.1, a corresponding next hop may be a local VM, or may be a remote VM. Herein, a route whose next hop is the local VM of the leaf switch 1 is referred to as a local route, and a route whose next hop is the remote VM is referred to as a remote route. The remote VM is, for example, a VM connected to another leaf switch different from the leaf switch 1.

Specifically, for the leaf switch 1 shown in FIG. 3, a VRF table of the leaf switch 1 may be specifically:
prefix: 1.1.1.1 next hop: VM 1 (local)
(--prefix: 1.1.1.1 next hop: VM 1 (local))
prefix: 1.1.1.1 next hop: VM 2 (local)
(--prefix: 1.1.1.1 next hop: VM 2 (local))
prefix: 1.1.1.1 next hop: VM 3 (remote)
(--prefix: 1.1.1.1 next hop: VM 3 (remote))
prefix: 1.1.1.1 next hop: VM 4 (remote)
(--prefix: 1.1.1.1 next hop: VM 4 (remote))

In other words, when the prefix (namely, a destination address) is 1.1.1.1, next-hop routes corresponding to the leaf switch 1 include two local routes (the next hops are the VM 1 and the VM 2) and two remote routes (the next hops are the VM 3 and the VM 4).

For the leaf switch 2 shown in FIG. 3, a VRF table of the leaf switch 2 may be specifically:
prefix: 1.1.1.1 next hop: VM 1 (remote)
(--prefix: 1.1.1.1 next hop: VM 1 (remote))
prefix: 1.1.1.1 next hop: VM 2 (remote)
(--prefix: 1.1.1.1 next hop: VM 2 (remote))
prefix: 1.1.1.1 next hop: VM 3 (local)
(--prefix: 1.1.1.1 next hop: VM 3 (local))
prefix: 1.1.1.1 next hop: VM 4 (local)
(--prefix: 1.1.1.1 next hop: VM 4 (local))

Similarly, when the prefix (namely, a destination address) is 1.1.1.1, next-hop routes corresponding to the leaf switch 2 include two remote routes (the next hops are the VM 1 and the VM 2) and two local routes (the next hops are the VM 3 and the VM 4).

Generally, to implement VM-based load balancing of the VNF network element, in other words, a plurality of VMs evenly share a service of the VNF network element, a local route and a remote route are equivalent on a leaf switch. In other words, when the leaf switch forwards a packet to an IP address, the leaf switch may equivalently select one of a plurality of local routes and/or remote routes corresponding to the IP address, and forward the packet based on the selected route.

In this way, when a plurality of VMs that share a same IP address are connected to different leaf switches, a routing loop is likely to occur. Specifically, when the leaf switch 1 receives the packet whose destination address is 1.1.1.1, the leaf switch 1 selects the VM 3 or the VM 4 from the VM 1 to the VM 4 as a next hop of a route. Because the VM 3 and the VM 4 are connected to the leaf switch 2, the leaf switch 1 forwards the packet to the leaf switch 2 through the spine switch 1. When the leaf switch 2 receives the packet forwarded by the spine switch 1, the leaf switch 2 may select the VM 1 or the VM 2 as a next hop of a route. Therefore, the leaf switch 2 forwards the packet to the leaf switch 1 through a spine switch 2. In other words, the packet is always forwarded between the leaf switch 1 and the leaf switch, and cannot reach the destination address, resulting in the routing loop.

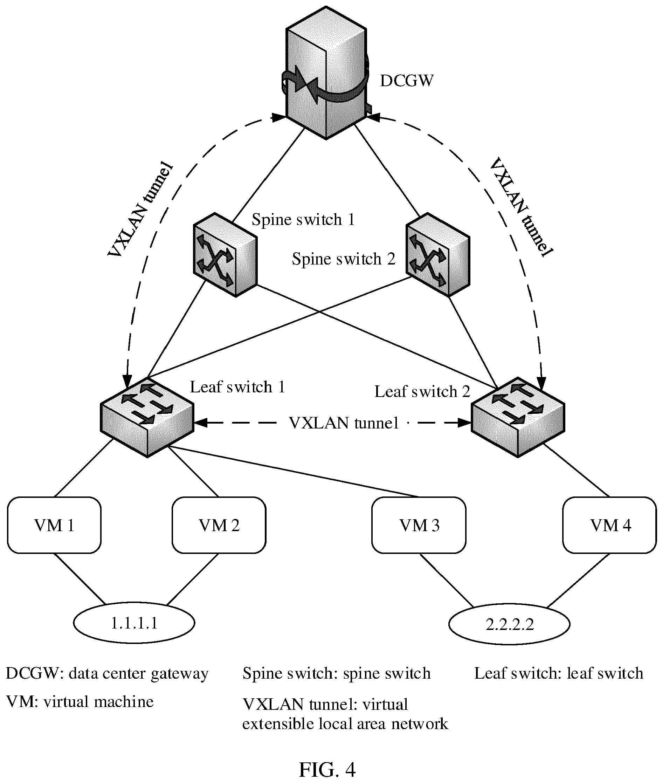

In addition, the leaf switch preferably selects the local route to forward the packet, and this can avoid the routing loop. However, packet forwarding pressure is centralized on the local VM. Consequently, it is difficult to implement load balancing in an entire network. FIG. 4 is a schematic diagram of another scenario according to an embodiment of this application. A VNF network element 1 is distributed on a VM 1 and a VM 2, and the VM 1 and the VM 2 share an IP address 1.1.1.1. A VNF network element 2 is distributed on a VM 3 and a VM 4, and the VM 3 and the VM 4 share an IP address 2.2.2.2. The VM 1 to the VM 3 are connected to a leaf switch 1, and the VM 4 is connected to a leaf switch 2.

In this case, for the leaf switch 1 shown in FIG. 4, a VRF table of the leaf switch 1 may be specifically:
prefix: 1.1.1.1 next hop: VM 1 (local)
(--prefix: 1.1.1.1 next hop: VM 1 (local))
prefix: 1.1.1.1 next hop: VM 2 (local)
(--prefix: 1.1.1.1 next hop: VM 2 (local))
prefix: 2.2.2.2 next hop: VM 3 (local)
(--prefix: 2.2.2.2 next hop: VM 3 (local))
prefix: 2.2.2.2 next hop: VM 4 (remote)
(--prefix: 2.2.2.2 next hop: VM 4 (remote))

For the leaf switch 2 shown in FIG. 4, a VRF table of the leaf switch 2 may be specifically:
prefix: 1.1.1.1 next hop: VM 1 (remote)
(--prefix: 1.1.1.1 next hop: VM 1 (remote))
prefix: 1.1.1.1 next hop: VM 2 (remote)
(--prefix: 1.1.1.1 next hop: VM 2 (remote))
prefix: 2.2.2.2 next hop: VM 3 (remote)
(--prefix: 2.2.2.2 next hop: VM 3 (remote))
prefix: 2.2.2.2 next hop: VM 4 (local)
(--prefix: 2.2.2.2 next hop: VM 4 (local))

In this embodiment, information in the VRF is intended to describe the application scenario of this embodiment more clearly. It may be understood that content and a style of the information presented in the VRF tables in an actual application may be specifically designed based on a requirement. In the scenario shown in FIG. 4, if a leaf switch preferably selects a local route when forwarding a packet, when the leaf switch 1 receives a packet sent by the VM 1 or the VM 2, and a destination address of the packet is 2.2.2.2, the leaf switch 1 always selects to forward the packet to the local VM3 according to a rule of preferably selecting a local route. Consequently, the VM 3 is always in a high-load state while the VM 4 is always in an idle state. In this way, load balancing cannot be implemented.

The foregoing uses a network structure shown in FIG. 1 as an example. It may be understood that a possible structure of the data center network is not limited thereto. For example, the data center network may alternatively not include the spine switch, or the leaf switch is further connected to a Layer 2 leaf switch, and then a VM user device is connected to the Layer 2 leaf switch. The Layer 2 leaf switch may also be understood as a user-side device. However, in different network structures, the foregoing problem may still exist.

In view of this, an embodiment of this application provides a packet forwarding method. A first network device receives a packet sent by a second network device, where the packet carries a virtual network identifier corresponding to a local virtual machine of the first network device. In addition, the first network device may forward the first packet to the corresponding local virtual machine based on the virtual network identifier in the packet. This prevents the packet from being forwarded to another network device again, and ensures normal forwarding of the packet.

The packet forwarding method provided in this embodiment of this application may be applied to a network architecture in which a VXLAN tunnel is deployed and that is shown in FIG. 3 or FIG. 4, or may be applied to a network architecture in which another transmission tunnel is deployed. This is not limited herein.

It may be understood that the first network device in this embodiment may be a network device connected to a virtual machine, for example, the leaf switch 1 in the network structure shown in FIG. 1. The second network device in this embodiment may be a network device that establishes a transmission tunnel with the first network device, for example, the DCGW or the leaf switch 2 in the network structure shown in FIG. 1. The first network device and the second network device are not specifically limited in this embodiment.

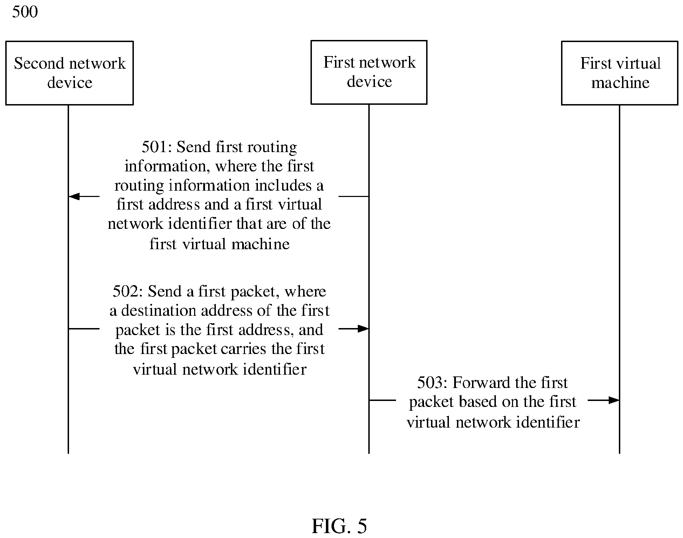

FIG. 5 is a schematic flowchart of a packet forwarding method 500 according to an embodiment of this application. As shown in FIG. 5, the packet forwarding method 500 provided in this embodiment of this application includes the following steps.

501: A first network device sends first routing information to a second network device, where the first routing information is used to advertise a route to a first address of a first virtual machine, the first routing information includes a first virtual network identifier of the first virtual machine, and the first virtual machine is a local virtual machine of the first network device.

In this embodiment, the first network device notifies the second network device of the route of reaching the first address of the first virtual machine by sending the first routing information to the second network device, so that the second network device can determine the first address of the first virtual machine. The first address of the first virtual machine may be a service IP address shared by the first virtual machine and one or more other virtual machines. Virtual machines that share a same service IP address may be used to process a same service. For example, the first address of the first virtual machine may be a loopback (loopback) IP address, and the loopback IP address may be, for example, 1.1.1.1. Each of the first virtual machine and the one or more other virtual machines that share the same loopback IP address 1.1.1.1 may be used to process a packet sent to the loopback IP address 1.1.1.1.

The first routing information sent by the first network device further includes the first virtual network identifier of the first virtual machine, a correspondence exists between the first virtual network identifier and the first virtual machine, and the first virtual network identifier is used to identify the first virtual machine. The first network device may determine, based on the first virtual network identifier, the first virtual machine corresponding to the first virtual network identifier. For example, when a VXLAN tunnel is deployed between the first network device and the second network device, the first virtual network identifier may be specifically a VXLAN network identifier (VXLAN Network Identifier, VNI), and the VNI may be used to identify the first virtual machine in a VXLAN network. Alternatively, the first virtual network identifier may be an identifier of another type, provided that the first network device can uniquely determine, based on the identifier, the first virtual machine connected to the first network device.

In a possible implementation, when the VXLAN tunnel is deployed between the first network device and the second network device, the first routing information sent by the first network device to the second network device may be a border gateway protocol (border gateway protocol, BGP) Ethernet virtual private network (Ethernet Virtual Private Network, EVPN) route advertised by the first network device. In other words, the first network device may enable the BGP EVPN route to carry the first address of the first virtual machine and the first virtual network identifier of the first virtual machine, and advertise the BGP EVPN route to the second network device to transfer the address of the first virtual machine and the first virtual network identifier of the first virtual machine. In addition, the first network device may further advertise the BGP EVPN route to another VTEP device, to notify the first address of the first virtual machine and the first virtual network identifier of the first virtual machine.

For example, the first network device may advertise, to the second network device, a BGP EVPN route carrying an extended community attribute, to notify the address of the first virtual machine and the first virtual network identifier of the first virtual machine. The BGP EVPN route carries the extended community attribute, and the extended community attribute carries a specific field that may be used to carry the first virtual network identifier. The BGP EVPN route can indicate the correspondence between the address of the first virtual machine and the first virtual network identifier of the first virtual machine.

In a possible implementation, before the first network device sends the first routing information to the second network device, the first network device may allocate the first virtual network identifier to the first virtual machine based on a fact that the first virtual machine is the local virtual machine of the first network device.

It may be understood that, when the virtual machine (namely, the local virtual machine of the first network device) connected to the first network device is online, the first network device may obtain the service IP address corresponding to the virtual machine, and the first network device may dynamically allocate a corresponding IP address to the online virtual machine based on the service IP address corresponding to the virtual machine. For example, when a virtual machine 1 and a virtual machine 2 are connected to the first network device, and the virtual machine 1 and the virtual machine 2 share a service IP address 1.1.1.1, after the virtual machine 1 and the virtual machine 2 that are connected to the first network device are online, the first network device may obtain the service IP address 1.1.1.1 that are shared by the virtual machine 1 and the virtual machine 2. The first network device may further obtain IP addresses of the virtual machine 1 and the virtual machine 2, to subsequently send a packet to the virtual machine 1 or the virtual machine 2 based on the IP address of the virtual machine 1 or the IP address of the virtual machine 2. It may be understood that the IP address of the virtual machine may be allocated by a dynamic host configuration protocol (Dynamic Host Configuration Protocol, DHCP) server. For example, the first network device may obtain an IP address 192.168.1.1 of the virtual machine 1 and an IP address 192.168.1.2 of the virtual machine 2. In this way, when the first network device needs to send the packet to the virtual machine 1 or the virtual machine 2, the first network device may send the packet to the virtual machine 1 or the virtual machine 2 based on the IP address 192.168.1.1 of the virtual machine 1 or the IP address 192.168.1.2 of the virtual machine 2.

In this embodiment, after the first virtual machine is online, the first network device may obtain the first address of the first virtual machine and an IP address of the first virtual machine, and allocate the first virtual network identifier to the first virtual machine.

Optionally, after the first network device obtains the IP address of the first virtual machine and allocates the corresponding first virtual network identifier to the first virtual machine, the first network device may store a correspondence between the first virtual network identifier and the IP address of the first virtual machine, so that the first network device can determine the IP address of the first virtual machine based on the first virtual network identifier.

For example, Table 1 lists a correspondence that is between a virtual network identifier and an IP address of a virtual machine and that is stored in the first network device.

**Table 1 Virtual network identifier correspondence**

| Virtual network identifier | IP address of a virtual machine |
|---|---|
| 1001 | 192.168.1.1 |
| 1002 | 192.168.1.2 |
| 1003 | 192.168.1.3 |

As shown in Table 1, the first network device may store the correspondence between a virtual network identifier and an IP address of a virtual machine. In the table listing the correspondence between a virtual network identifier and an IP address of a virtual machine, the virtual network identifier one-to-one corresponds to the IP address of the virtual machine, and the first network device may find, in the correspondence table based on the first virtual network identifier, the IP address of the first virtual machine corresponding to the first virtual network identifier. In another possible manner, the first network device may alternatively determine the IP address of the first virtual machine based on tunnel information carried in a received packet.

502: The first network device receives a first packet sent by the second network device, where the first packet carries the first virtual network identifier, and a destination address of the first packet is the first address.

In this embodiment, after the first network device sends the first routing information to the second network device, the second network device may determine the first virtual machine corresponding to the first address and the first virtual network identifier of the first virtual machine. In this way, when the second network device obtains the first packet whose destination address is the first address, the second network device may determine, based on the destination address of the first packet, that the first virtual machine is a virtual machine used to process the first packet. Then, the second network device may enable the first packet sent to the first network device to carry the first virtual network identifier, so that the first network device may forward the first packet to the first virtual machine based on the first virtual network identifier carried in the first packet.

503: The first network device forwards the first packet to the first virtual machine based on the first virtual network identifier.

In this embodiment, after the first network device receives the first packet that carries the first virtual network identifier, the first network device may determine, based on the first virtual network identifier, the first virtual machine corresponding to the first virtual network identifier, to forward the first packet to the first virtual machine.

In a possible implementation, when the first network device stores the correspondence between the first virtual network identifier and the IP address of the first virtual machine, the first network device may determine the IP address of the first virtual machine based on the first virtual network identifier in the first packet. Then, the first network device forwards the first packet to the first virtual machine through a local outbound interface based on the IP address of the first virtual machine.

It may be understood that, in this embodiment, the first network device determines, based on the first virtual network identifier in the first packet, to forward the first packet to the first virtual machine corresponding to the first virtual network identifier, and does not need to forward the first packet according to a VRF table in the first network device. This prevents the first packet from being forwarded to another network device again, and ensures normal forwarding of the first packet.

In a possible implementation, in the method 500, after the second network device receives the first routing information sent by the first network device, the second network device may generate the VRF table based on the first routing information. The VRF table includes the correspondence between the first address of the first virtual machine and the first virtual network identifier. In a process of forwarding the first packet, the second network device may determine, in the VRF table based on a fact that the destination address of the first packet is the first address, the first virtual network identifier corresponding to the first address. Then, the second network device sends the first packet to the first network device, where the first packet carries the first virtual network identifier.

The VRF table generated by the second network device may include one or more virtual network identifiers corresponding to the first address. In other words, the second network device may find, in the VRF table based on the first address, the one or more virtual network identifiers corresponding to the first address.

It may be understood that when the second network device receives only the first routing information sent by the first network device, the VRF table generated by the second network device includes only the first virtual network identifier corresponding to the first address, and the first virtual network identifier may be located in tunnel outbound interface information in the generated VRF table. When the second network device further receives routing information sent by another network device, or the second network device further receives other routing information sent by the first network device, and these routing information carries the virtual network identifiers corresponding to the first address, the VRF table generated by the second network device includes a plurality of virtual network identifiers corresponding to the first address, and the plurality of virtual network identifiers corresponding to the first address may also be located in the tunnel outbound interface information in the generated VRF table.

For example, the network structure shown in FIG. 3 is used as an example. The VM 1 to the VM 4 share a service IP address 1.1.1.1. After the VM 1 and the VM 2 are online, the leaf switch 1 may respectively allocate virtual network identifiers 1001 and 1002 to the VM 1 and the VM 2. After the VM 3 and the VM 4 are online, the leaf switch 2 may respectively allocate virtual network identifiers 1003 and 1004 to the VM 3 and the VM 4. In addition, the leaf switch 1 may notify, by sending routing information to the DCGW, the service IP addresses and the virtual network identifiers that correspond to the VM 1 and the VM 2, and the leaf switch 2 may also notify, by sending routing information to the DCGW, the service IP addresses and the virtual network identifiers that correspond to the VM 3 and the VM 4. In this way, the DCGW generates a corresponding VRF table by receiving the routing information sent by the leaf switch 1 and the leaf switch 2. An example of the VRF table is as follows:
prefix: 1.1.1.1 VNI: 1001
(--prefix: 1.1.1.1; virtual network identifier: 1001)
prefix: 1.1.1.1 VNI: 1002
(--prefix: 1.1.1.1; virtual network identifier: 1002)
prefix: 1.1.1.1 VNI: 1003
(--prefix: 1.1.1.1; virtual network identifier: 1003)
prefix: 1.1.1.1 VNI: 1004
(--prefix: 1.1.1.1; virtual network identifier: 1004)

It can be learned from the VRF table generated by the DCGW that the virtual network identifiers corresponding to the IP address 1.1.1.1 are 1001, 1002, 1003, and 1004. When obtaining a packet whose destination address is 1.1.1.1, the DCGW may find the corresponding virtual network identifiers 1001, 1002, 1003, and 1004 in the VRF table based on the destination address 1.1.1.1. The virtual network identifiers 1001, 1002, 1003, and 1004 may be located in the tunnel outbound interface information in the VRF table.

In a possible implementation, the first routing information sent by the first network device to the second network device further includes the IP address of the first virtual machine, and the VRF table generated by the second network device may also include the IP address of the first virtual machine. The second network device may determine the IP address of the corresponding first virtual machine and the first virtual network identifier in the VRF table based on the first address.

When the VXLAN tunnel is deployed between the first network device and the second network device, a manner in which the second network device forwards, to the first network device, the first packet that carries the first virtual network identifier may be specifically as follows: After receiving the first packet, the second network device may search the local VRF table based on the destination address (namely, the first address) of the first packet. When the VRF table includes a plurality of equal-cost multi-path routings (Equal-Cost Multi-Path routing, ECMP) corresponding to the first address, the second network device may find the plurality of ECMPs, and each of the plurality of ECMPs includes an IP address of a next-hop virtual machine and corresponding tunnel outbound interface information (namely, a corresponding virtual network identifier). The second network device may determine one of the plurality of ECMPs based on the plurality of found ECMPs, where the routing includes the IP address and the first virtual network identifier of the first virtual machine. When the VRF table includes only one routing corresponding to the first address, the second network device may find one routing based on the first address, and the routing includes the IP address and the first virtual network identifier of the first virtual machine.

Then, the second network device performs VXLAN tunnel encapsulation on the first packet, and sends the encapsulated first packet to the first network device through the VXLAN tunnel. The encapsulated first packet carries the IP address and the first virtual network identifier of the first virtual machine.

In this way, after receiving the first packet sent by the second network device, the first network device may perform tunnel decapsulation on the first packet to obtain the first virtual network identifier, so as to forward the first packet to the first virtual machine based on the first virtual network identifier.

In other words, when the second network device finds that the VRF table includes a plurality of routes corresponding to a destination address of a packet, the second network device may determine one of the plurality of routes according to a load balancing policy, and determine an IP address and a virtual network identifier that are of a virtual machine and that are included in the route, to perform tunnel encapsulation on the packet based on the IP address and the virtual network identifier that are of the virtual machine and that are in the route.

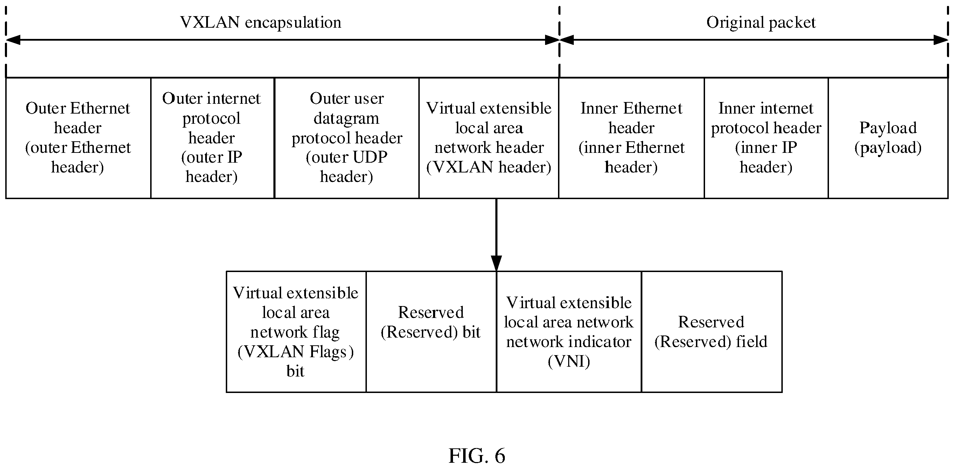

Specifically, an example in which the VXLAN tunnel is deployed between the first network device and the second network device is used, and reference may be made to FIG. 6. FIG. 6 is a schematic diagram of encapsulation of a VXLAN tunnel packet according to an embodiment of this application. As shown in FIG. 6, an original packet includes a payload (payload), an inner internet protocol header (inner IP header), and an inner Ethernet header (inner Ethernet header). After VXALN tunnel encapsulation is performed on the packet, a VXLAN header is added to the packet, and a standard UDP header is in front of the VXLAN header. To be specific, the UDP header includes an outer Ethernet header (outer Ethernet header), an outer internet protocol header (outer IP header), and an outer user datagram protocol header (outer UDP header). The VXLAN header specifically includes a VXLAN flag (VXLAN Flags) bit, a reserved (Reserved) bit, a VXLAN network identifier (VNI), and a reserved (Reserved) field. The second network device may insert the virtual network identifier of the first virtual machine (namely, the VNI of the first virtual machine) into a location corresponding to the VNI in the VXLAN header, to enable the first packet to carry the virtual network identifier of the first virtual machine. In a more specific implementation, for a format of the VXLAN packet, refer to the standard RFC7348. All content of the standard is introduced into the embodiments of this application herein.

The foregoing is a detailed description of the packet forwarding method 500 provided in the embodiment of this application. Based on the embodiment corresponding to FIG. 5, this application further provides a possible embodiment.

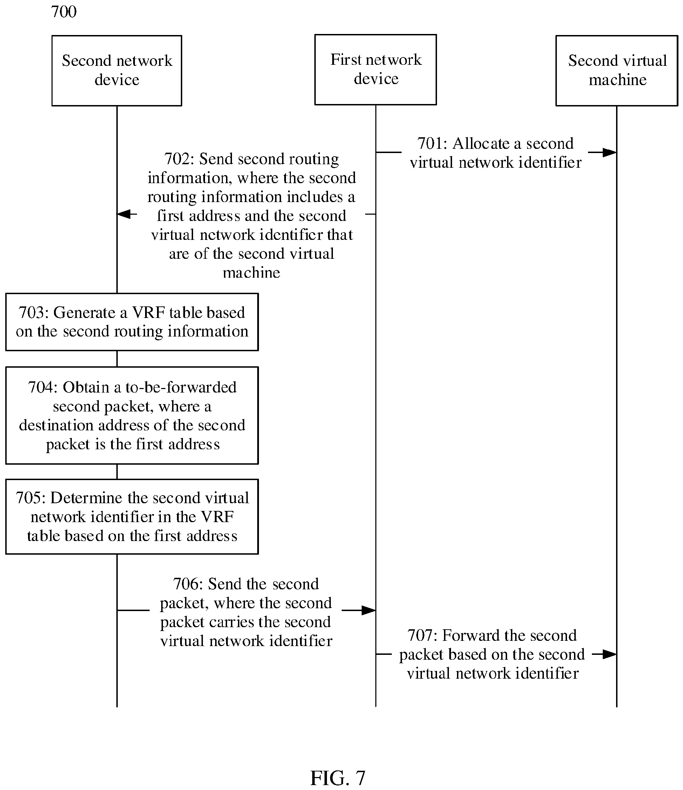

FIG. 7 is a schematic flowchart of a packet forwarding method 700 according to an embodiment of this application. As shown in FIG. 7, the packet forwarding method 700 provided in this embodiment of this application includes the following steps.

701: The first network device allocates a second virtual network identifier to a second virtual machine.

In this embodiment, in addition to the first virtual machine, the second virtual machine is connected to the first network device, and the second virtual machine is a local virtual machine of the first network device. When the second virtual machine is online, the first network device may obtain a service IP address corresponding to the second virtual machine and an IP address of the second virtual machine, and the first network device allocates the corresponding second virtual network identifier to the second virtual machine based on the service IP address corresponding to the second virtual machine. The service IP address of the second virtual machine is the same as the service IP address of the first virtual machine, and both are the first address, and the second virtual network identifier of the second virtual machine is different from the first virtual network identifier of the first virtual machine. For example, the first addresses corresponding to the first virtual machine and the second virtual machine are 1.1.1.1, the first virtual network identifier of the first virtual machine is 1001, and the second virtual network identifier of the second virtual machine is 1002.

Optionally, after the first network device allocates the corresponding second virtual network identifier to the second virtual machine, the first network device may store a correspondence between the second virtual network identifier and the IP address of the second virtual machine, so that the first network device may determine the IP address of the second virtual machine based on the second virtual network identifier.

702: The first network device sends second routing information to the second network device.

The second routing information is used to advertise a route to the first address of the second virtual machine, and the second routing information includes the second virtual network identifier of the second virtual machine. Optionally, the second routing information may further include the IP address of the second virtual machine. To be specific, the second network device may obtain, based on the second routing information, the first address, the IP address, and the second virtual network identifier that correspond to the second virtual machine.

In a possible implementation, when the VXLAN tunnel is deployed between the first network device and the second network device, the second routing information sent by the first network device to the second network device may also be a BGP EVPN route advertised by the first network device. In other words, the first network device may enable a BGP EVPN route to carry the address of the second virtual machine and the second virtual network identifier of the second virtual machine, and advertise the BGP EVPN route to the second network device to transfer the address of the second virtual machine and the second virtual network identifier of the second virtual machine.

In this embodiment, the first routing information and the second routing information may be carried in a same route, or may be carried in different routes. For example, when a plurality of virtual machines connected to the first network device are onboard at the same time or the plurality of virtual machines are online at close times, after allocating corresponding virtual network identifiers to the plurality of virtual machines, the first network device may notify, by using the same route, a service IP address and the virtual network identifiers that correspond to the plurality of virtual machines.

703: The second network device generates the VRF table based on the second routing information.

The VRF table generated by the second network device based on the second routing information includes a correspondence between the second virtual network identifier and the first address, so that the second network device can find the corresponding second virtual network identifier in the VRF table based on the first address.

In a possible implementation, the VRF table generated by the second network device based on the second routing information may be obtained by updating an original VRF table in the second network device. For example, after the second network device generates the VRF table based on the first routing information, the second network device may update the generated VRF table based on the received second routing information, to obtain an updated VRF table. The updated VRF table includes the first virtual network identifier and the second virtual network identifier that correspond to the first address.

704: The second network device obtains a to-be-forwarded second packet, and a destination address of the second packet is the first address.

In other words, the destination address of the second packet is the same as the destination address of the first packet, and the second packet and the first packet may belong to same service traffic.

705: The second network device determines, in the VRF table based on the first address, the second virtual network identifier corresponding to the first address.

The VRF table generated by the second network device includes a first route and a second route that correspond to the first address. The first route includes the IP address and the first virtual network identifier of the first virtual machine, and the second route includes the IP address and the second virtual network identifier of the second virtual machine. In other words, each of the first virtual machine corresponding to the first virtual network identifier and the second virtual machine corresponding to the second virtual network identifier may be used to process a packet whose destination address is the first address. The second network device may find the first route and the second route in the VRF table based on the first address, and the second network device selects the second route from the first route and the second route, to obtain the second virtual network identifier in the second route.

706: The second network device sends the second packet to the first network device.

The second packet carries the second virtual network identifier, and the destination address of the second packet is the first address.

In a possible implementation, when the VXLAN tunnel is deployed between the first network device and the second network device, after obtaining the to-be-forwarded second packet, the second network device searches the local VRF table based on the destination address of the second packet. The VRF table includes the first route and the second route, the first route includes the IP address and the first virtual route identifier of the first virtual machine, and the second route includes the IP address and the second virtual route identifier of the second virtual machine. The second network device may determine, from the first route and the second route, the second route as a route for forwarding the second packet. Then, the second network device performs VXLAN tunnel encapsulation on the second packet, and sends the encapsulated second packet to the first network device through the VXLAN tunnel. The encapsulated second packet carries the IP address and the second virtual network identifier of the second virtual machine. In this way, after the first network device receives the second packet sent by the second network device, the first network device may perform tunnel decapsulation on the second packet to obtain the second virtual network identifier.

707: The first network device forwards the second packet to the second virtual machine based on the second virtual network identifier.

After receiving the second packet sent by the second network device, the first network device may obtain the second virtual network identifier carried in the second packet. For example, the first network device may obtain the second virtual network identifier from a header of the second packet by performing tunnel decapsulation on the second packet.

Because the first network device stores the correspondence between the second virtual network identifier and the IP address of the second virtual machine, the second network device may determine the IP address of the second virtual machine based on the second virtual network identifier in the second packet. Then, the second network device forwards the first packet to the second virtual machine through a local outbound interface based on the IP address of the second virtual machine.

It may be understood that, in this embodiment, when the VRF table includes a plurality of routes corresponding to the first address, the second network device may determine one of the plurality of routes in the VRF table, and forward the packet based on a virtual network identifier included in the route, so that the first network device can forward the packet to a corresponding virtual machine based on the virtual network identifier in the packet. This ensures that the packet can be normally forwarded to the corresponding virtual machine, and implements load balancing of virtual machines while a routing loop is avoided.

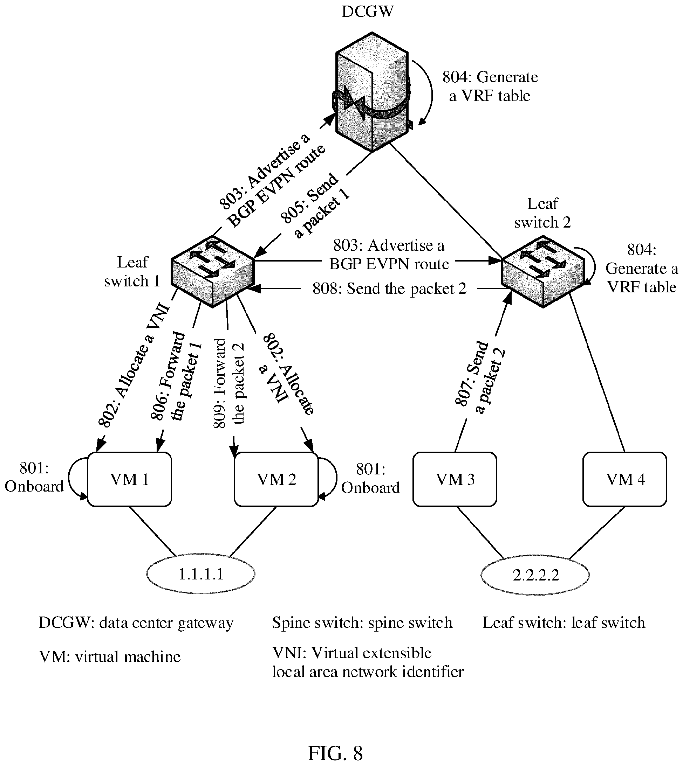

For ease of understanding, the following describes in detail the packet forwarding method provided in this embodiment of this application with reference to a specific application scenario. FIG. 8 is a schematic diagram of a packet forwarding method according to an embodiment of this application. For ease of description, a spine switch between a leaf switch and a DCGW is not shown. A VM 1 and a VM 2 are connected to a leaf switch 1, a VM 3 and a VM 4 are connected to a leaf switch 2, a VXLAN tunnel is deployed between the leaf switch 1 and the DCGW, and a VXLAN tunnel is also deployed between the leaf switch 1 and the leaf switch 2. The leaf switch 1 in FIG. 8 may be the first network device in the foregoing embodiments, and the DCGW in FIG. 8 may be the second network device in the foregoing embodiments.

As shown in FIG. 8, the packet forwarding method shown in FIG. 8 includes the following steps.

801: The VM 1 and the VM 2 are online.

The VM 1 and the VM 2 are connected to the leaf switch 1, and the VM 1 and the VM 2 share a same service IP address 1.1.1.1.

802: The leaf switch 1 allocates virtual network identifiers to the VM 1 and the VM 2.

For example, after the leaf switch 1 learns that the VM 1 and the VM 2 are online, the leaf switch 1 may obtain the service IP address 1.1.1.1 shared by the VM 1 and the VM 2, an IP address 192.168.1.1 of the VM 1, and an IP address 192.168.1.2 of the VM 2. The leaf switch 1 may further allocate a virtual network identifier 1001 to the VM 1, and allocate a virtual network identifier 1002 to the VM 2, where each of the virtual network identifier 1001 and the virtual network identifier 1002 may be a VNI.

In addition, the leaf switch 1 may further store a correspondence between the IP address 192.168.1.1 of the VM 1 and the virtual network identifier 1001, and a correspondence between the IP address 192.168.1.2 of the VM 2 and the virtual network identifier 1002.

803: The leaf switch 1 advertises a BGP EVPN route.

The leaf switch 1 may enable the BGP EVPN route to carry the service IP address, the IP addresses, and the virtual network identifiers that correspond to the VM 1 and the VM 2, and then the leaf switch 1 advertises the BGP EVPN route to each of the DCGW and the leaf switch 2 in a VXLAN network, to notify the service IP address, the IP addresses, and the virtual network identifiers that correspond to the VM 1 and the VM 2.

804: Each of the DCGW and the leaf switch 2 generate a VRF table.

Specifically, after the DCGW and the leaf switch 2 receive the BGP EVPN route advertised by the leaf switch 1, each of the DCGW and the leaf switch 2 may generate the VRF table based on the BGP EVPN route, and the generated VRF table includes the correspondence between the service IP address of the VM 1 and the virtual network identifier, and the correspondence between the service IP address of the VM 2 and the virtual network identifier. For example, The VRF table generated by each of the DCGW and the leaf switch 2 is specifically shown as follows:
prefix: 1.1.1.1 VNI: 1001
(--prefix: 1.1.1.1; virtual network identifier: 1001)
prefix: 1.1.1.1 VNI: 1002
(--prefix: 1.1.1.1; virtual network identifier: 1002)

The foregoing VRF table is used as an example. In an actual application, the virtual network identifier may be specifically located in tunnel outbound interface information.

805: The DCGW sends a packet 1 to the leaf switch 1.

Specifically, the DCGW may obtain the packet 1 sent by an external network, and a destination address of the packet 1 is 1.1.1.1. The DCGW may find a corresponding route in the VRF table based on the destination address of the packet 1, for example, find a route 1 including the IP address of the VM 1 and the virtual network identifier 1001 and a route 2 including the IP address of the VM 2 and the virtual network identifier 1002. Then, the DCGW may determine, from the found route 1 and the found route 2, one route as a route for forwarding the packet 1, for example, select the route 1 as the route for forwarding the packet 1, and determine the virtual network identifier 1001 in the route 1. Finally, the DCGW adds the virtual network identifier 1001 to the packet 1, and sends, to the leaf switch 1, the packet 1 that carries the virtual network identifier 1001.

806: The leaf switch forwards the packet 1 to the VM 1.

After receiving the packet 1 sent by the DCGW, the leaf switch 1 may obtain the virtual network identifier 1001 carried in the packet 1. For example, the leaf switch 1 performs tunnel decapsulation on the packet 1 to obtain the virtual network identifier 1001 in a header of the packet 1. When the leaf switch 1 stores the correspondence between the virtual network identifier and the IP address of the virtual machine, the leaf switch 1 may determine, based on the virtual network identifier 1001, the IP address 192.168.1.1 of the VM 1 corresponding to the virtual network identifier 1001. Alternatively, the leaf switch 1 may directly determine the IP address of the VM 1 based on information in a VXLAN header of the packet. Then, the leaf switch 1 forwards the packet 1 to the VM 1 through a local outbound interface based on the IP address 192.168.1.1 of the VM 1.

807: A VM 3 sends a packet 2 to the leaf switch 2.

A destination address of the packet 2 is 1.1.1.1, and the packet 2 and the packet 1 may belong to same service traffic.

808: The leaf switch 2 sends the packet 2 to the leaf switch 1.

Specifically, the leaf switch 2 may also search the VRF table for a corresponding route based on the destination address of the packet 2, for example, find the route 1 and the route 2. Then, the leaf switch 2 may determine one of the found route 1 and the found route 2 as a route for forwarding the packet 2, for example, select the route 2 as the route for forwarding the packet 2, and determine the virtual network identifier 1002 in the route 2. Finally, the leaf switch 2 adds the virtual network identifier 1002 to the packet 2, and sends, to the leaf switch 1, the packet 2 that carries the virtual network identifier 1002.

809: The leaf switch 1 forwards the packet 2 to the VM 1.

After receiving the packet 2 sent by the leaf switch 2, the leaf switch 1 may obtain the virtual network identifier 1002 carried in the packet 2. For example, the leaf switch 1 performs tunnel decapsulation on the packet 2 to obtain the virtual network identifier 1002 in a header of the packet 2. The leaf switch 1 may determine, based on the virtual network identifier 1002, the IP address 192.168.1.2 of the VM 2 corresponding to the virtual network identifier 1002. Then, the leaf switch 2 forwards the packet 2 to the VM 2 through a local outbound interface based on the IP address 192.168.1.2 of the VM 2.

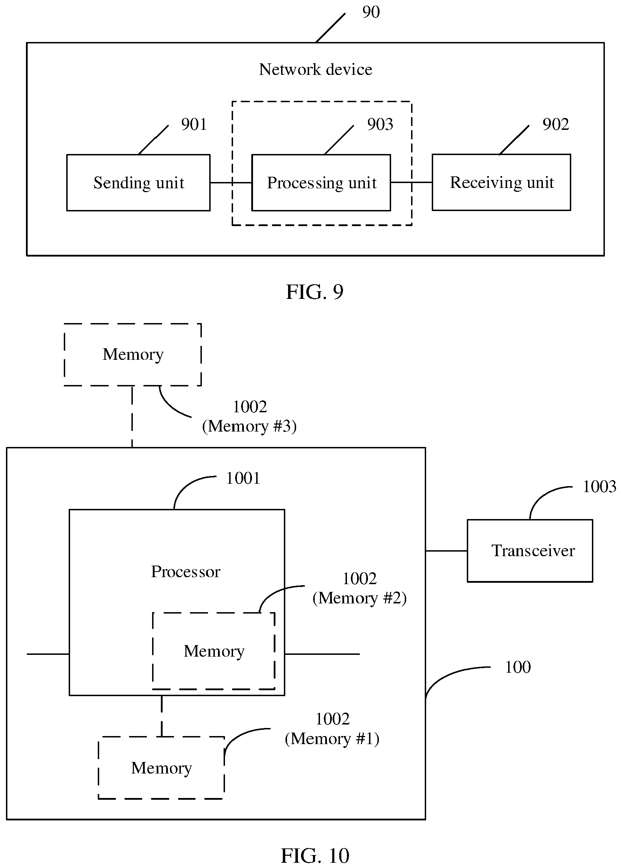

FIG. 9 is a schematic structural diagram of a network device 90 according to an embodiment of this application. The network device 90 provided in this embodiment of this application may be, for example, the leaf switch 1 or the leaf switch 2 in the foregoing method embodiments. The network device 90 may include, for example, a sending unit 901, configured to send first routing information to a second network device, where the first routing information is used to advertise a route to a first address of a first virtual machine, the first routing information includes a first virtual network identifier of the first virtual machine, and the first virtual machine is a local virtual machine of the first network device; and a receiving unit 902, configured to receive a first packet sent by the second network device, where the first packet carries the first virtual network identifier, and a destination address of the first packet is the first address. The sending unit 901 is further configured to forward the first packet to the first virtual machine based on the first virtual network identifier.

Optionally, in a possible implementation, the network device 90 further includes a processing unit 903, configured to allocate the first virtual network identifier to the first virtual machine based on a fact that the first virtual machine is the local virtual machine of the first network device.

Optionally, in a possible implementation, the sending unit 901 is further configured to send second routing information to the second network device, where the second routing information is used to advertise a route to the first address of a second virtual machine, and the second routing information includes a second virtual network identifier of the second virtual machine. The first address is an address shared by the first virtual machine and the second virtual machine, the second virtual network identifier is different from the first virtual network identifier, and the second virtual machine is a local virtual machine of the first network device.

Optionally, in a possible implementation, the receiving unit 902 is further configured to receive a second packet sent by the second network device, where the second packet carries the second virtual network identifier, and a destination address of the second packet is the first address. The sending unit 901 is further configured to forward the second packet to the second virtual machine based on the second virtual network identifier.

Optionally, in a possible implementation, the first routing information further includes an IP address of the first virtual machine. The processing unit 903 is further configured to store a correspondence between the first virtual network identifier and the IP address of the first virtual machine.

Optionally, in a possible implementation, the processing unit 903 is further configured to determine, based on the first virtual network identifier in the first packet, the IP address of the first virtual machine corresponding to the first virtual network identifier.

The sending unit 901 is further configured to forward the first packet to the first virtual machine through a local outbound interface based on the IP address of the first virtual machine.

Optionally, in a possible implementation, the processing unit 903 is further configured to perform tunnel decapsulation on the first packet to obtain the first virtual network identifier, so as to forward the first packet to the first virtual machine based on the first virtual network identifier.

Optionally, in a possible implementation, the first address of the first virtual machine is a loopback loopback address.

Optionally, in a possible implementation, a VXLAN tunnel is deployed between the network device 90 and the second network device.

In another embodiment, the network device 90 includes: a receiving unit 902, configured to receive first routing information sent by a first network device, where the first routing information is used to advertise a route to a first address of a first virtual machine, the first routing information includes a first virtual network identifier of the first virtual machine, and the first virtual machine is a local virtual machine of the first network device; and a sending unit 901, configured to send a first packet to the first network device, where a destination address of the first packet is the first address, and the first packet carries the first virtual network identifier of the first virtual machine.

Optionally, in a possible implementation, the first virtual network identifier in the first packet is used to indicate the first network device to forward the first packet to the first virtual machine based on the first virtual network identifier.

Optionally, in a possible implementation, the network device 90 further includes a processing unit 903, configured to generate a VRF table based on the first routing information, where the VRF table includes a correspondence between the first address of the first virtual machine and the first virtual network identifier.

Optionally, in a possible implementation, the processing unit 903 is further configured to determine, in the VRF table based on a fact that the destination address of the first packet is the first address, the first virtual network identifier corresponding to the first address. The sending unit 901 is further configured to send the first packet to the first network device, where the first packet carries the first virtual network identifier.

Optionally, in a possible implementation, the receiving unit 902 is further configured to receive second routing information sent by the first network device, where the second routing information is used to advertise a route to the first address of a second virtual machine, and the second routing information includes a second virtual network identifier of the second virtual machine. The first address is an address shared by the first virtual machine and the second virtual machine, the second virtual network identifier is different from the first virtual network identifier, and the second virtual machine is a local virtual machine of the first network device.

Optionally, in a possible implementation, the sending unit 901 is further configured to send a second packet to the first network device, where the second packet carries the second virtual network identifier, and a destination address of the second packet is the first address. The second virtual network identifier is used to indicate the first network device to forward the second packet to the second virtual machine based on the second virtual network identifier.

Optionally, in a possible implementation, the first routing information further includes an IP address of the first virtual machine. The processing unit 903 is further configured to perform tunnel encapsulation on the first packet based on the IP address of the first virtual machine, to send the first packet to the first network device through a tunnel.

FIG. 10 is a schematic structural diagram of a network device 100 according to an embodiment of this application. As shown in FIG. 10, a network device 100 is provided. The network device 100 may be, for example, the first network device or the second network device in the foregoing method embodiments, or may be the network device 90, and may be configured to perform a function performed by the corresponding network device in the foregoing embodiments. The network device 100 includes a processor 1001, and the processor 1001 is coupled to a memory 1002. The memory 1002 may be independent of the processor 1001 or the network device 100, for example, a memory (Memory) #3, or may be inside the processor 1001 or the network device 100 (a Memory #1 and a Memory #2). The memory 1002 may be a physically independent unit, or may be storage space, a network hard disk, or the like on a cloud server. Optionally, there may be one or more memories 1002. When there are a plurality of memories 1002, the memories 1002 may be located at a same location or different locations, and may be used independently or in cooperation.

The memory 1002 is configured to store a computer-readable instruction (or referred to as a computer program).

The processor 1001 is configured to read the computer-readable instruction to implement the method provided in any one of the foregoing aspects related to the network device and the implementations thereof.

Optionally, the network device 100 further includes a transceiver 1003, configured to receive and send data.

In addition, the processor 1001 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the digital signal processor and a microprocessor. In addition, the memory 1002 may include a volatile memory (volatile memory), for example, a random access memory (random-access memory, RAM). The memory may alternatively include a non-volatile memory (non-volatile memory), for example, a flash memory (flash memory), a hard disk drive (hard disk drive, HDD), a solid-state drive (solid-state drive, SSD), a cloud storage (cloud storage), a network attached storage (network attached storage), or a network drive (network drive). The memory may alternatively include a combination of the foregoing types of memories or another medium or product in any form that has a storage function.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in the embodiments of this application. The foregoing storage medium includes any medium that can store program code, for example, a USB flash drive, a removable hard disk, a read-only memory, a random access memory, a magnetic disk, or a compact disc.

## Claims

1. A packet forwarding method, wherein the method comprises:
sending, by a first network device, first routing information to a second network device, wherein the first routing information is used to advertise a route to a first address of a first virtual machine, the first routing information comprises a first virtual network identifier of the first virtual machine, and the first virtual machine is a local virtual machine of the first network device;
receiving, by the first network device, a first packet sent by the second network device, wherein the first packet carries the first virtual network identifier, and a destination address of the first packet is the first address; and
forwarding, by the first network device, the first packet to the first virtual machine based on the first virtual network identifier.

2. The method according to claim 1, wherein the method further comprises:
sending, by the first network device, second routing information to the second network device, wherein the second routing information is used to advertise a route to the first address of a second virtual machine, the second routing information comprises a second virtual network identifier of the second virtual machine, the first address is an address shared by the first virtual machine and the second virtual machine, the second virtual network identifier is different from the first virtual network identifier, and the second virtual machine is a local virtual machine of the first network device.

3. The method according to claim 1 or 2, wherein the first routing information further comprises an internet protocol, IP, address of the first virtual machine, and the method further comprises: storing, by the first network device, a correspondence between the first virtual network identifier and the IP address of the first virtual machine.

4. A packet forwarding method, wherein the method comprises:
receiving, by a second network device, first routing information sent by a first network device, wherein the first routing information is used to advertise a route to a first address of a first virtual machine, the first routing information comprises a first virtual network identifier of the first virtual machine, and the first virtual machine is a local virtual machine of the first network device; and
sending, by the second network device, a first packet to the first network device, wherein a destination address of the first packet is the first address, and the first packet carries the first virtual network identifier of the first virtual machine.

5. The method according to claim 4, wherein the method further comprises:
generating, by the second network device, a virtual routing and forwarding VRF table based on the first routing information, wherein the VRF table comprises a correspondence between the first address of the first virtual machine and the first virtual network identifier.

6. A network device, configured to:
send first routing information to a second network device, wherein the first routing information is used to advertise a route to a first address of a first virtual machine, the first routing information comprises a first virtual network identifier of the first virtual machine, and the first virtual machine is a local virtual machine of the first network device; and
receive a first packet sent by the second network device, wherein the first packet carries the first virtual network identifier, and a destination address of the first packet is the first address;
forward the first packet to the first virtual machine based on the first virtual network identifier.

7. The network device according to claim 6, wherein further configured to:
allocate the first virtual network identifier to the first virtual machine.

8. The network device according to claim 6 or 7, wherein further configured to:
send second routing information to the second network device, wherein the second routing information is used to advertise a route to the first address of a second virtual machine, the second routing information comprises a second virtual network identifier of the second virtual machine, the first address is an address shared by the first virtual machine and the second virtual machine, the second virtual network identifier is different from the first virtual network identifier, and the second virtual machine is a local virtual machine of the first network device.

9. The network device according to claim 8, wherein further configured to:
receive a second packet sent by the second network device, wherein the second packet carries the second virtual network identifier, and a destination address of the second packet is the first address; and
forward the second packet to the second virtual machine based on the second virtual network identifier.

10. A network device, wherein configured to:
receive first routing information sent by a first network device, wherein the first routing information is used to advertise a route to a first address of a first virtual machine, the first routing information comprises a first virtual network identifier of the first virtual machine, and the first virtual machine is a local virtual machine of the first network device; and
send a first packet to the first network device, wherein a destination address of the first packet is the first address, and the first packet carries the first virtual network identifier of the first virtual machine.

11. The network device according to claim 10, wherein the first virtual network identifier in the first packet is used to indicate the first network device to forward the first packet to the first virtual machine based on the first virtual network identifier.

12. The network device according to claim 10 or 11, wherein further configured to:
generate a VRF table based on the first routing information, wherein the VRF table comprises a correspondence between the first address of the first virtual machine and the first virtual network identifier.

13. The network device according to any one of claims 10 to 12, wherein further configured to:
receive second routing information sent by the first network device, wherein the second routing information is used to advertise a route to the first address of a second virtual machine, the second routing information comprises a second virtual network identifier of the second virtual machine, the first address is an address shared by the first virtual machine and the second virtual machine, the second virtual network identifier is different from the first virtual network identifier, and the second virtual machine is a local virtual machine of the first network device.

14. A computer program product, wherein comprising instructions which, and when executed by a processor, the method according to any one of claims 1 to 5 is implemented.

15. A system, comprising a network device according to any one of claims 6 to 9, and a network device according to any one of claims 10 to 13.
